# EUROPÄISCHE PATENTANMELDUNG

(11) **EP 4 563 839 A1**
(43) Veröffentlichungstag der Anmeldung: **04.06.2025**
(21) Anmeldenummer: 23212852.0
(22) Anmeldetag: 29.11.2023
(51) Int. Cl.: F16D 65/00

(54) **BREMSVORRICHTUNG MIT EINER BREMSSCHEIBE UND EINER BREMSSTAUBAUFFANGEINRICHTUNG**

(71) Anmelder: Ostfalia Hochschule Für Angewandte Wissenschaften Hochschule Braunschweig/Wolfenbüttel, 38302 Wolfenbüttel (DE)
(72) Erfinder: Klinge, Falk, 38667 Bad Harzburg (DE)
(74) Vertreter: REHBERG HÜPPE + PARTNER

(57) **Zusammenfassung**

Eine Bremsvorrichtung (1) weist eine um eine Drehachse (2) drehbar gelagerte Bremsscheibe (11), einen einen Rand der Bremsscheibe (11) umgreifenden Bremssattel (17) mit daran abgestützten Bremsbelägen (29), die zum Bremsen gegen die Bremsscheibe (11) andrückbar sind, eine dem Bremssattel (17) benachbarte Bremsstaubauffangeinrichtung (18) mit einem durchströmbaren Staubfilter (19) und eine den Bremssattel (17) sowie die Bremsstaubauffangeinrichtung (18) abdeckende Abdeckhaube (15) auf. Die Abdeckhaube (15) ist als Strömungskörper geformt, der einer Gegenfläche (30) unter Ausbildung eines Strömungskanals (22) mit einer Engstelle (23) derart gegenüber liegt, dass zumindest ein Teil (24) einer durch Drehung um die Drehachse (2) hervorgerufenen Ringströmung (14) um die Drehachse (2) durch den Strömungskanal (22) hindurch tritt. Die Engstelle (23) ist in einer Hauptdrehrichtung (16) der Drehung um die Drehachse (2) hinter den Bremsbelägen (29) angeordnet; und eine im Bereich der Engstelle (23) in den Strömungskanal (22) einmündende Absaugöffnung (20) in der Abdeckhaube (15) ist mit dem Staubfilter (19) der Bremsstaubauffangeinrichtung (18) überspannt.

## Beschreibung

### TECHNISCHES GEBIET DER ERFINDUNG

Die Erfindung bezieht sich auf eine Bremsvorrichtung mit einer Bremsscheibe und einer Bremsstaubauffangeinrichtung sowie den weiteren Merkmalen des Oberbegriffs des unabhängigen Patentanspruchs 1.

Beim Bremsen mit einer Scheibenbremse anfallender Bremsstaub besteht aus kleinen Partikeln der Bremsscheibe und der Bremsbeläge, die abgerieben werden, wenn die Bremsbeläge zum Abbremsen an die rotierende Bremsscheibe angedrückt werden. Bei Bremsstaub handelt es sich um Feinstaub mit Gesundheitsgefährdungspotential. Zur Vermeidung dieses Gesundheitsgefährdungspotentials und im Hinblick auf zukünftige Feinstaubverordnungen und Abgasnormen, die mutmaßlich auch Bremsstaub betreffen werden, ist der beim Bremsen anfallende Bremsstaub aufzufangen.

### STAND DER TECHNIK

Aus der DE 19 643 869 A1 ist eine Bremsanlage für ein Kraftfahrzeug bekannt, bei der die Drehgeschwindigkeit mindestens einer mit den auf Federbeinen montierten Rädern gekoppelten Bremsscheibe durch Anpressen von auf Bremsbacken befestigten Bremsbelägen herabsetzbar ist. Um die Abgabe von Bremsstaub an die Umwelt und die Verschmutzung von Radfelgen durch Ablagerung von Bremsstaub zu vermeiden, ist eine in Drehrichtung gesehen hinter den Bremsbacken angebrachte Saugvorrichtung zum Absaugen des durch Abrieb an den Bremsbelägen entstehenden Bremsstaubs vorgesehen. Die Saugvorrichtung ist mit wenigstens einem trichterförmigen Staubaufnehmer ausgerüstet, der an seinem einen Ende eine an der Bremsscheibe oder Bremstrommel anliegende Saugöffnung aufweist und dessen anderes Ende über eine Saugleitung mit einem Sammelbehälter verbunden ist, hinter dem ein zum Absaugen des Bremsstaubs ausreichender Unterdruck angelegt wird. Zum Erzeugen des Unterdrucks kann eine Leitungsverbindung zwischen dem Sammelbehälter und einem Ansaugkrümmer des Kraftfahrzeugmotors dienen. Alternativ kann eine Leitungsverbindung zwischen dem Sammelbehälter und einem dem Fahrtwind ausgesetzten Venturi-Rohr zum Erzeugen des Unterdrucks dienen. Die Saugvorrichtung soll so gesteuert werden, dass sie beim Schubabschalten des Kraftfahrzeugmotors mit verminderter und beim Betätigen der Bremse mit voller Saugkraft arbeitet. Zum Absaugen des zu Beginn des Bremsens anfallenden Bremsstaub reicht der zu Beginn des Bremsens anliegende Unterdruck selbst dann nicht aus, wenn die Saugvorrichtung bereits bei einem vorherigen Schubabschalten des Kraftfahrzeugmotors mit verminderter Saugkraft arbeitet.

Aus der DE10 2008 029 504 B4 ist eine Bremsstaubabsauganlage für mit einer ABS-Einrichtung ausgestattete Fahrzeuge mit Scheibenbremse bekannt. Bei Betätigung der Scheibenbremse wird ein Bremsklotz mit Hilfe eines Bremssattels gegen die Bremsscheibe gedrückt. Die Bremsstaubabsauganlage weist einen Saugapparat auf, der Bremsstaub über mehrere Saugleitungen in eine Filteranlage absaugt. Der Bremssattel ist gänzlich von einem Absauggehäuse umgeben, an das die Saugleitungen angeschlossen sind. Der Saugapparat wird von einem Steuer- und Betriebserfassungsgerät eingeschaltet, sobald die ABS-Einrichtung in Funktion ist. Das Absauggehäuse erstreckt sich über den Bremssattel hinaus kreisbogenförmig um die Bremsscheibe. Ein Betriebsverzögerungssystem lässt den Saugapparat nach Beendigung der Betätigung der Scheibenbremse eine vorgegebene Zeitspanne weiterlaufen. Die bekannte Bremsstaubabsauganlage ist nicht schnell genug betriebsbereit, um den beim Beginn des Bremsens anfallenden Bremsstaub abzusaugen, weil der Saugapparat eine gewisse Zeit benötigt, um einen dafür ausreichenden Unterdruck aufzubauen.

Aus der DE 10 2009 021 203 A1 ist eine Bremsstaubaufnahmevorrichtung für Kraftfahrzeuge zur Aufnahme von Bremsstaub einer Fahrzeug-Radbremse in einer Staubsammeleinrichtung bekannt. Die Staubsammeleinrichtung ist als Filterelement ausgebildet, das der radialen Außenkante der Bremsscheibe der Fahrzeug-Radbremse vorgelagert ist, das sich über einen begrenzten Winkelabschnitt der Bremsscheibe erstreckt und das eine Bremsscheiben-Seitenwand zumindest teilweise überdeckt. Dazu weist das Filterelement einen U-förmigen Querschnitt auf und erstreckt sich zumindest abschnittsweise radial entlang beider Bremsscheiben-Seitenwände. Das Filterelement ist in Drehrichtung der Bremsscheibe bei Vorwärtsfahrt der Kraftfahrzeuge einem Bremssattel der Fahrzeug-Radbremse nachgeschaltet. Das Filterelement ist in einem Filtergehäuse aufgenommen. Das Filtergehäuse weist den Bremsbelag zugewandte, sich in Radialrichtung und/oder Achsrichtung vergrößernde Strömungsführungsabschnitte auf. Das Filterelement ist vorzugsweise als Formteil beziehungsweise Formfilter ausgebildet, dessen Festigkeit beziehungsweise Struktur ausreichend hoch ist, dass die Form des Filterelements auch ohne stützende Maßnahmen beibehalten wird. Die bekannte Bremsstaubaufnahmevorrichtung soll den Vorteil haben, dass grundsätzlich keine Absaugeinrichtung erforderlich ist, über die ein Luftstrom erzeugt werden muss, welcher den Bremsabrieb einem Sammelbehälter zuführt

Eine Bremsvorrichtung mit den Merkmalen des Oberbegriffs des unabhängigen Patentanspruchs 1 ist aus der DE 10 2019 133 794 A1 bekannt. Eine Fahrzeug-Feinstaubsammeleinrichtung weist eine Saugeinrichtung auf, in welcher von einer Unterdruckeinheit über einen Saugkanal ein Saugdruck zur Verfügung gestellt wird. Eine Trenneinrichtung dient zum Trennen von Feinstaub von einer Bremsscheibe einer Bremse des Fahrzeugs. Eine Abdeckhaube tritt mit der Bremsscheibe in Wechselwirkung und reduziert einen Austritt von Feinstaub zwischen der Fahrzeug-Feinstaubsammeleinrichtung und der Bremsscheibe. In der Abdeckhaube sind ein Bremssattel, ein Bremsbelag und ein Bremsaktuator der Bremse einerseits und die Fahrzeug-Feinstaubsammeleinheit andererseits angeordnet. Die Fahrzeug-Feinstaubsammeleinrichtung weist eine Einlaufführung auf, über welche eine Grenzschicht, in welcher Feinstaub oder Abrieb von der Bremsscheibe und/oder von dem Bremsbelag enthalten ist, einem Saugkanal zugeführt wird. Der Saugkanal ist an eine Saugeinrichtung angeschlossen. In der Saugeinrichtung wird ein Unterdruck erzeugt, um die Strömung der Grenzschicht mit dem Feinstaub durch den Saugkanal hervorzurufen. In die Saugeinrichtung ist ein Filter, welcher die Luft der Bremsschicht durchlässt, aber den Feinstaub aus der Luft der Grenzschicht entfernt, integriert. Die Saugeinrichtung ist in eine Felge eines Fahrzeugrads integriert. Die Felge weist ein Felgenbett mit einer zylindrischen Innenfläche auf. Eng benachbart der Innenfläche ist ein Strömungskanalkörper angeordnet, welcher nicht mit der Felge rotiert, sodass das Felgenbett und die Innenfläche einer Relativbewegung gegenüber dem Strömungskanalkörper ausführen. An der rotierenden Innenfläche der Felge bildet sich eine bewegte Grenzschicht aus. Zwischen der Innenfläche der Felge und der der Innenfläche zugewandten Außenfläche des Strömungskanalkörper ist ein Strömungskanal ausgebildet. Der Strömungskanal verjüngt sich kontinuierlich in Richtung der Bewegung der bewegten Grenzschicht. Der Strömungskanal verfügt über eine Engstelle. Infolge der Verjüngung des Strömungskanals bis zu der Engstelle wird die Strömung in dem Strömungskanal beschleunigt, was zur Folge hat, dass der statische Druck an der Engstelle reduziert ist. In die Engstelle mündet der Saugkanal der Saugeinrichtung ein. Ein Luftstrom der Saugeinrichtung wird nach Beseitigung von Feinstaub über den Saugkanal der Grenzsicht der Innenfläche zugeführt und tritt in einem Außenbereich mit der Grenzschicht aus der Unterdruckeinheit aus. Der Strömungskanalkörper verfügt über eine große Erstreckung in Richtung des Felgenbetts. Diese bekannte Fahrzeug-Feinstaubsammeleinrichtung weist einen komplexen mehrteiligen Aufbau auf.

### AUFGABE DER ERFINDUNG

Der Erfindung liegt die Aufgabe zugrunde, eine Bremsvorrichtung mit den Merkmalen des Oberbegriffs des unabhängigen Patentanspruchs 1 aufzuzeigen, die einen einfachen aber doch in Bezug auf das Auffangen von Bremsstaub hocheffizienten Aufbau aufweist.

### LÖSUNG

Die Aufgabe der Erfindung wird durch eine Bremsvorrichtung mit den Merkmalen des unabhängigen Patentanspruchs 1 gelöst. Bevorzugte Ausführungsformen der erfindungsgemäßen Bremsvorrichtung sind den abhängigen Patentansprüchen zu entnehmen. Der letzte abhängige Patentanspruch ist auf ein Fahrzeug, insbesondere ein Kraftfahrzeug oder Schienenfahrzeug, mit mindestens einer erfindungsgemäßen Bremsvorrichtung gerichtet.

### BESCHREIBUNG DER ERFINDUNG

Eine erfindungsgemäße Bremsvorrichtung weist eine um eine Drehachse drehbar gelagerten Bremsscheibe, einen den Rand der Bremsscheibe umgreifenden Bremssattel mit daran abgestützten Bremsbelägen, die zum Bremsen gegen die Bremsscheibe andrückbar sind, eine dem Bremssattel benachbarte Bremsstaubauffangeinrichtung mit einem durchströmbaren Staubfilter, eine den Bremssattel und die Bremsstaubauffangeinrichtung abdeckende Abdeckhaube und einen Strömungskörper auf, der einer Gegenfläche unter Ausbildung eines Strömungskanals mit einer Engstelle derart gegenüberliegt, dass zumindest ein Teil einer durch Drehung um die Drehachse hervorgerufenen Ringströmung durch den Strömungskanal hindurch tritt. Im Bereich der Engstelle mündet eine Absaugöffnung in den Strömungskanal. Der Strömungskörper ist die Abdeckhaube. Die Engstelle ist in einer Hauptdrehrichtung der Drehung um die Drehachse hinter den Bremsbelägen angeordnet; und die Absaugöffnung in der Abdeckhaube ist mit dem Staubfilter der Bremsstaubauffangeinrichtung überspannt.

Der Strömungskörper wird also von der den Bremssattel und die Bremsstaubauffangeinrichtung abdeckenden Abdeckhaube ausgebildet. Die Absaugöffnung, die im Bereich der Engstelle in den Strömungskanal mündet, ist entsprechend in der Abdeckhaube vorgesehen. Die Absaugöffnung in der Abdeckhaube ist jedoch zu der Bremsscheibe hin nicht komplett offen, sondern sie ist mit dem Staubfilter der Bremsstaubauffangeinrichtung überspannt. Für eine Außenkontur der Abdeckhaube, die von der durch den Strömungskanal hindurchtretenden Ringströmung überströmt wird, bedeutet dies, dass sie auch durch eine größere Absaugöffnung nicht unterbrochen ist, weil sie durch den Staubfilter der Bremsstaubauffangeinrichtung an der Außenkontur der Abdeckhaube fortgesetzt wird. So kann die Absaugöffnung in der Abdeckhaube und damit der Bereich, über den hinweg ein sich in dem Strömungskanal ausbildender Unterdruck auf die der Bremsscheibe abgekehrte Seite des Staubfilters einwirkt, vergleichsweise groß sein, ohne die Durchströmung des Strömungskanals und die in dem Strömungskanal durch dessen Verengung bewirkte Erzeugung des Unterdrucks zu stören. Wenn die Absaugöffnung der Abdeckhaube jedoch ihrerseits so klein ist, dass sie die Durchströmung des Strömungskanals und die in dem Strömungskanal durch dessen Verengung bewirkte Erzeugung des Unterdrucks nicht stört, kann die Absaugöffnung eine Absaugöffnung einer Vielzahl von Absaugöffnungen in der Abdeckhaube sein und die Vielzahl von Absaugöffnungen in der Abdeckhaube kann innerhalb der Außenkontur der Abdeckhaube von dem Staubfilter überspannt sein. Durch die in beiden Fällen vergleichsweise große Fläche des Staubfilters, über die der Unterdruck anliegt, wird eine längerfristige Wirksamkeit des Staubfilters sichergestellt, auch wenn er bereits größere Mengen an Bremsstaub aufgefangen hat. Die Drehung um die Drehachse, die die Ringströmung hervorruft, welche zumindest teilweise und idealerweise vollständig durch den Strömungskanal hindurch tritt, ist die Drehung aller in der Nähe der Abdeckhaube befindlichen Bauteile gegenüber der Abdeckhaube, und damit insbesondere die Drehung der Bremsscheibe und jedes daran festgelegten Flächenbereichs der Gegenfläche.

Bei der erfindungsgemäßen Bremsvorrichtung beträgt ein Abstand der Engstelle des Strömungskanals zu den Bremsbelägen in der Hauptdrehrichtung zwischen 10° und 60° und vorzugsweise zwischen 20° und 50° um die Drehachse. Je nach Bremssattellänge des Bremssattels in Umfangsrichtung um die Drehachse beträgt dieser Abstand typischerweise zwischen 10 % und 100 % der Bremssattellänge. Die Engstelle liegt in der Hauptdrehrichtung also vergleichsweise weit hinten, insbesondere verglichen mit einer Engstelle, die bei einer herkömmlichen Bremsvorrichtung regelmäßig zwischen den Bremssattel und einer Gegenfläche ausgebildet wird.

Die Abdeckhaube kann weitere mit dem oder einem weiteren Staubfilter der Bremsstaubauffangeinrichtung überspannte Absaugöffnungen aufweisen, die in der Hauptdrehrichtung vor und/oder hinter der Engstelle an den Strömungskanal angrenzen. Auch vor und hinter der Engstelle herrscht in dem Strömungskanal ein Unterdruck gegenüber dem Inneren der Abdeckhaube, der dazu genutzt werden kann, mit Bremsstaub belastete Luft durch den oder den weiteren Staubfilter der Bremsstaubauffangeinrichtung hindurch zu saugen, um den Bremsstaub aus der Luft abzufiltern. Die vor der Engstelle an den Strömungskanal angrenzenden Absaugöffnungen können nicht nur hinter dem Bremssattel, sondern auch im Bereich des Bremssattels und sogar davor angeordnet sein, wo sie nur durch eine Rückströmung der mit Bremsstaub belasteten Luft in der Abdeckhaube erreichbar sind.

Die mit dem oder dem weiteren Staubfilter überspannten Absaugöffnungen in der Abdeckhaube können zusammen 10 % bis 90 % einer Oberfläche der dem Strömungskanal zugewandten Außenkontur der Abdeckhaube ausmachen. Vorzugsweise beträgt der Anteil der Absaugöffnungen 50 % bis 80 % der Oberfläche der dem Strömungskanal zugewandten Außenkontur der Abdeckhaube. Dies bedeutet, dass die Absaugöffnungen in der Abdeckhaube einen ganz wesentlichen Teil der Oberfläche der dem Strömungskanal zugewandten Außenkontur der Abdeckhaube ausmachen.

Bei großen Absaugöffnungen wird die Oberfläche der dem Strömungskanal zugewandten Außenkontur der Abdeckhaube durch den die jeweilige Absaugöffnung überspannenden Staubfilter über die Absaugöffnungen hinweg fortgesetzt. Bei kleineren Absaugöffnungen, die die Durchströmung des Strömungskanals und die in dem Strömungskanal durch dessen Verengung bewirkte Erzeugung des Unterdrucks nicht stören, kann der die jeweilige Absaugöffnung überspannende Staubfilter auf der Innenseite der Abdeckhaube angeordnet sein. Die Absaugöffnungen der Abdeckhaube können beispielsweise als vergleichsweise große Löcher in einem Blech oder vergleichsweise kleine Poren eines Sinterkörpers ausgebildet sein.

Eine dem Strömungskanal zugewandte Filteroberfläche des Staubfilters kann gefaltet sein, um die zur Verfügung stehende Fläche des Staubfilters besonders groß auszubilden. In einer speziellen Ausführungsform der erfindungsgemäßen Bremsvorrichtung bildet die den Strömungskanal zugewandten Filteroberfläche quer zu der Hauptdrehrichtung verlaufende Filtertaschen aus. Die an die Kontur der Abdeckhaube heran reichenden Öffnungen dieser Filtertaschen können dort mit den Absaugöffnungen mit der Abdeckhaube fluchten oder die Absaugöffnungen unmittelbar ausbilden.

Auch bei der zuletzt erläuterten Ausführungsform der Bremsvorrichtung ist die Oberfläche der dem Strömungskanal zugewandten Außenkontur der Abdeckhaube möglichst so zu gestalten, dass der durch den Strömungskanal hindurchtretende Teil der durch die Drehung um die Drehachse hervorgerufenen Ringströmung über die Länge des Strömungskanals nicht von dieser Oberfläche abreißt. Dies ist Voraussetzung dafür, dass sich die die Abdeckhaube überströmende Ringströmung ohne großen Druckverlust ausbildet. Die durch die Drehung um die Drehachse hervorgerufene Ringströmung ist im Prinzip eine torusförmige Strömung, die aber im Bereich der Abdeckhaube und insbesondere innerhalb des sich verengenden Strömungskanals gegenüber einer reinen Torusform deformiert ist.

Grundsätzlich kann die Oberfläche der dem Strömungskanal zugewandten Außenkontur der Abdeckhaube an ihrer in der Hauptdrehrichtung ausgerichteten Hinterkante eine Abrisskante für den Teil der durch den Strömungskanal hindurchtretenden Ringströmung ausbilden. An dieser Abrisskante bilden sich Wirbel. In den Wirbeln herrscht ein Unterdruck, der ebenfalls zum Absaugen von mit Feinstaub beladener Luft durch mit Staubfilter überspannter Absaugöffnungen der Abdeckhaube genutzt werden kann. Allerdings kann dieser Unterdruck auch ungefilterte Luft durch einen Spalt zwischen Bremsscheibe und Hinterkante der Abdeckhaube ansaugen. Zudem geht mit der Wirbelbildung ein signifikanter Energieverlust einher. Dieser Energieverlust bedeutet einen erhöhten Verbrauch eines mit der erfindungsgemäßen Bremsvorrichtung ausgestatten Kraftfahrzeugs.

Vorzugsweise verläuft die Oberfläche der dem Strömungskanal zugewandten Außenkontur der Abdeckhaube an ihrer in der Hauptdrehrichtung ausgerichteten Hinterkante unter einem Winkel zwischen 5° und 20°, vorzugsweise zwischen 7° und 15°, zu einer benachbarten Bremsfläche der Bremsscheibe hin, das heißt vergleichsweise flach und damit so, dass die Teile der Ringströmung an der Hinterkante der Abdeckhaube ohne Bildung großer Wirbel zusammenlaufen. Dadurch wird eine Sogwirkung auf ungefilterte Luft durch den Spalt zwischen Abdeckhaube und Bremsscheibe minimiert.

An ihrer der Hauptdrehrichtung entgegengerichteten Vorderkante kann die Oberfläche der dem Strömungskanal zugewandten Außenkontur der Abdeckhaube unter einem Winkel zwischen 7° und 45°, vorzugsweise zwischen 10° und 20° von einer benachbarten Bremsfläche der Bremsscheibe weg verlaufen. Die Vorderkante kann also etwas stumpfer als eine flach auslaufende Hinterkante sein. Die Abdeckhaube beginnt aber ebenfalls vergleichsweise flach, um das Auftreten eines ausgeprägten Staudrucks an ihrer Vorderkante zu verhindern. Stattdessen bewirkt die flach einsetzende Vorderkante ein störungsfreies Abnehmen des durch den Strömungskanal hindurch geführten Teils der Ringströmung von der benachbarten Bremsfläche der Bremsscheibe.

Der Strömungskanal, der von der erfindungsgemäßen Bremsvorrichtung ausgebildet wird, kann im Bereich der Engstelle eine kleinste Kanalbreite zwischen 3 mm und 25 mm aufweisen. Vorzugsweise beträgt diese kleinste Kanalbreite zwischen 5 mm und 15 mm. Alternativ oder zusätzlich kann sich ein freier Querschnitt des Strömungskanals bis zu der Engstelle um 75 % bis 98 %, vorzugsweise um 85 % bis 95 %, seines Eingangsquerschnitts verringern. Die Verengung des Strömungskanals bestimmt die Größe des in dem Strömungskanal erzeugten Unterdrucks. Die Verengung des Strömungskanals kann ausschließlich durch das Abweichen der Außenkontur der Abdeckhaube von einen Torusformabschnitt bewirkt werden. Alternativ oder zusätzlich kann die Verengung des Strömungskanals durch ein Abweichen der dann gegenüber der Abdeckhaube drehfest angeordneten Gegenfläche von einen Torusformabschnitt bewirkt werden.

Die Gegenfläche, die der als Strömungskörper verwendeten Abdeckhaube über den Strömungskanal hinweg gegenüber liegt, läuft vorzugsweise durchgängig um die Drehachse umläuft, wobei die Gegenfläche einen Flächenbereich mit einer zumindest im Wesentlichen radial zu der Drehachse verlaufenden Flächennormalen aufweist. Mit diesem Flächenbereich begrenzt die Gegenfläche die Ringströmung radial nach außen. Diese Begrenzung erleichtert die Ausbildung einer stabilen und für die Anwendung der vorliegenden Erfindung ausreichend starken Ringströmung durch die Drehung um die Drehachse. Zusätzlich kann die Gegenfläche einen weiteren Flächenbereich mit einer zumindest im Wesentlichen parallel zu der Drehachse verlaufenden Flächennormalen aufweisen. Zwischen ihren verschiedenen Flächenbereichen ist die Gegenfläche vorzugsweise abgerundet. Die Engstelle des Strömungskanals kann - oder mehrere Engstellen des Strömungskanals können - zwischen der Abdeckhaube und dem einen und/oder anderen der Teilbereiche der Gegenfläche ausgebildet sein.

Vorzugsweise ist mindestens einer der Flächenbereiche der Gegenfläche drehfest gegenüber der Bremsscheibe angeordnet. Dies kann zum Beispiel dadurch realisiert sein, dass der mindestens eine Flächenbereich der Gegenfläche eine Oberfläche eines an der Bremsscheibe festgelegten Rads und insbesondere einer Felge eines solchen Rads ist. Dabei kann die Bremsscheibe in einem Felgentopf der Felge derart angeordnet sein, dass die als Gegenfläche wirksame Oberfläche der Felge nicht nur der Bremsfläche auf einer Seite der Bremsscheibe axial gegenüber liegt, sondern auch dem Rand der Bremsscheibe radial gegenüber liegt.

Vorzugsweise weist der von der erfindungsgemäßen Bremsvorrichtung ausgebildete Strömungskanal auf beiden Seiten der Bremsscheibe eine Engstelle auf, in deren Bereiche jeweils mindestens eine mit dem oder einem weiteren Staubfilter überspannte Absaugöffnung der Abdeckhaube in den Strömungskanal mündet. Dabei können separate Teile der Ringströmung durch separate Teilkanäle des Strömungskanals auf beiden Seiten der Bremsscheibe hindurch geführt werden, die jeweils eine der Engstellen auf einer Seite der Bremsscheibe aufweisen.

Auf mindestens einer Seite der Bremsscheibe, beispielsweise der einer Felge eines Rads gegenüberliegenden Seite der Bremsscheibe, kann mindestens ein Teilbereich der Gegenfläche eine Oberfläche eines Abdeckelements sein. Dieses Abdeckelement kann eine sich umlaufend um die Drehachse des Rads erstreckende und einen Felgentopf, in dem die Bremsscheibe angeordnet ist, teilweise abdeckende Abdeckscheibe sein. Das Abdeckelement kann gegenüber der Abdeckhaube ruhen. Dennoch kann ein zur Erzeugung von Unterdruck in dem Strömungskanal ausreichender Teil der durch die Drehung um die Drehachse hervorgerufenen Ringströmung durch den Strömungskanal zwischen der Abdeckhaube und dem Abdeckelement hindurchgeführt werden. Dieser Teil der Ringströmung wird jedoch intensiviert, wenn das Abdeckelement gegenüber der Bremsscheibe drehfest angeordnet ist und daher mit der Bremsscheibe um die Drehachse rotiert.

Einen Kühlkanal der Bremsscheibe, der zwischen zwei Teilscheiben oder Ringen der Bremsscheibe ausgebildet ist, kann die Abdeckhaube am Außenumfang der Bremsscheibe über mindestens 50 % der Erstreckung der Bremsscheibe um die Drehachse des Rads unbedeckt lassen, das heißt nicht abdecken. So wird eine Beeinträchtigung der Kühlung der Bremsscheibe infolge einer radialen Durchströmung ihres Kühlkanals durch die Abdeckhaube möglichst wenig behindert. Um die Abdeckung des Kühlkanals der Bremsscheibe durch die Abdeckhaube möglichst klein zu halten, kann die Abdeckhaube zweiteilig ausgebildet sein, was jedoch im Bereich des Bremssattels, der den Rand der Bremsscheibe sowieso übergreift, nicht notwendig ist. Die Abdeckhaube kann aber in der Hauptdrehrichtung hinter dem Bremssattel einen über dem Außenumfang der Bremsscheibe offenen, das heißt einen nicht mit Staubfilter überspannten Schlitz aufweisen. Dieser Schlitz in der Abdeckhaube kann sich über dem Kühlkanal in radialer Richtung von der Drehachse weg verengen, so dass auch die radiale Durchströmung dieses Schlitzes einen an die Abdeckhaube angrenzenden Unterdruck gegenüber dem Inneren der Abdeckhaube hervorruft, der genutzt werden kann, um Luft durch mit Staubfilter überspannte Absaugöffnungen in der Abdeckhaube abzusaugen.

Ein erfindungsgemäßes Fahrzeug, bei dem es sich um irgendein ein-, zwei- oder mehrspuriges Kraftfahrzeug oder Schienenfahrzeug handeln kann, weist mindestens ein Rad und eine erfindungsgemäße Bremsvorrichtung auf, an deren Bremsscheibe das Rad festgelegt ist. Insbesondere, wenn das Fahrzeug ein Schienenfahrzeug ist, kann die Bremsscheibe der Bremsvorrichtung mit axialem Abstand zu dem Rad und dann vorzugsweise zusammen mit der Abdeckhaube und allen darin angeordneten ruhenden Teilen der Bremsvorrichtung zwischen zwei Abdeckelementen angeordnet sein. Die erfindungsgemäße Bremsvorrichtung ist aber nicht nur bei Fahrzeugen, sondern überall einsetzbar, wo Bremsstaub von einer rotierenden Scheibenbremse aufzufangen ist.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Absaugöffnung die Rede ist, ist dies so zu verstehen, dass genau eine Absaugöffnung, zwei Absaugöffnungen oder mehr Absaugöffnungen vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt mit Blick von vorne eine erfindungsgemäße Bremsvorrichtung für ein um eine Drehachse drehbar gelagertes Rad, das vertikal geschnitten und nur schematisch dargestellt ist.
- **Fig. 2**: ist ein Blick längs der Drehachse von innen auf die Bremsvorrichtung in einer etwas anderen Ausführungsform als in Fig. 1 und ohne eine in Fig. 1 gezeigte Abdeckscheibe, wobei von dem Rad nur der Innenumfang eines Felgentopfs einer Felge wiedergegeben ist.

- **Fig. 3**: ist eine abgewickelte Außenansicht der Bremsvorrichtung in noch einer etwas anderen Ausführungsform als in gemäß Fig. 1 und 2 mit radialer Blickrichtung auf die Drehachse.
- **Fig. 4**: ist ein radial zu der Drehachse verlaufender Schnitt durch einen Schlitz in einer Abdeckhaube einer weiteren Ausführungsform der Bremsvorrichtung, der radial nach außen an einen Kühlkanal in einer Bremsscheibe der erfindungsgemäßen Bremsvorrichtung anschließt; und
- **Fig. 5**: ist eine von der Blickrichtung Fig. 2 entsprechende Schnittansicht einer weiteren Ausführungsform der erfindungsgemäßen Bremsvorrichtung.

### FIGURENBESCHREIBUNG

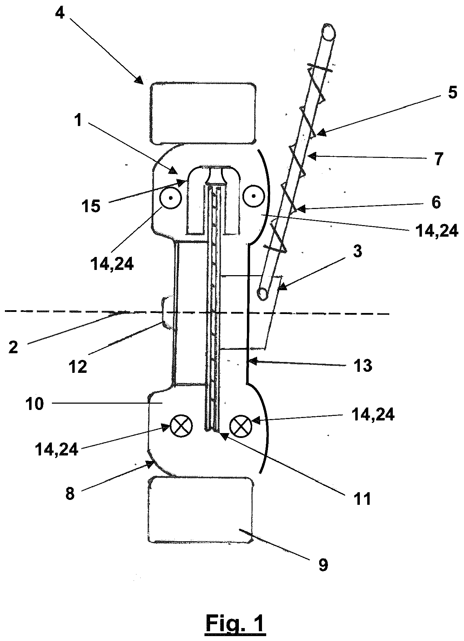

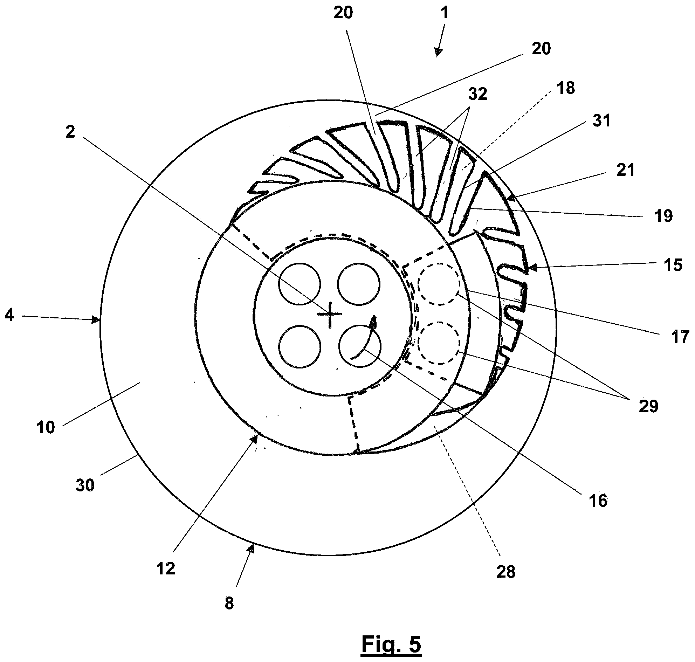

**Fig. 1** zeigt eine Bremsvorrichtung 1 für ein um eine Drehachse 2 in einem Stehlager 3 drehbar gelagertes Rad 4. Das Stehlager 3 ist an einer Karosserie eines zugehörigen Kraftfahrzeugs über hier nicht dargestellte Lenker und ein Federbein 5 mit Tragfeder 6 und integriertem Stoßdämpfer 7 abgestützt. Das Rad 4 weist eine Felge 8 und einen Reifen 9 auf. Die Felge 8 bildet einen Felgentopf 10 aus. In dem Felgentopf 10 ist eine Bremsscheibe 11 der Bremseinrichtung 1 drehfest auf einer Radnabe 12 gelagert, an die die Felge 8 über hier nicht dargestellte Radbolzen angeschraubt ist und die gegenüber dem Stehlager 3 um die Drehachse 3 drehbar sind. Dabei ist auf der der Felge 8 abgekehrten Seite der Bremsscheibe 11 eine Abdeckscheibe als um die Drehachse 2 umlaufendes Abdeckelement 13 angeordnet, die den Felgentopf 10 mit der darin angeordneten Bremsscheibe 11 zum Teil schließt. In dem Felgentopf 10 bilden die Felge 8 und die Bremsscheibe 11, die gemeinsam um die Drehachse 2 rotieren, eine Ringströmung 14 aus, weil die an die Felge 8 und die Bremsscheibe 11 angrenzende Grenzschicht der Luft in dem Felgentopf 10 von der Felge 8 und der Bremsscheibe 11 mitgenommen wird. Die Ringströmung 14 bildet sich auch auf der der Felge 8 abgekehrten Seite der Bremsscheibe 11 aus, selbst wenn das Abdeckelement 13 nicht mit dem Rad 4 rotiert, sondern still steht, und bis zu einem gewissen Maße sogar dann, wenn das Abdeckelement 13 gar nicht vorhanden ist. Die um die Drehachse 2 herum verlaufende Ringströmung strömt eine Abdeckhaube 15 der Bremsvorrichtung 1 an. Die Abdeckhaube 15 deckt nicht mit der Bremsscheibe 11 rotierende Bestandteile der Bremsvorrichtung 1 ab.

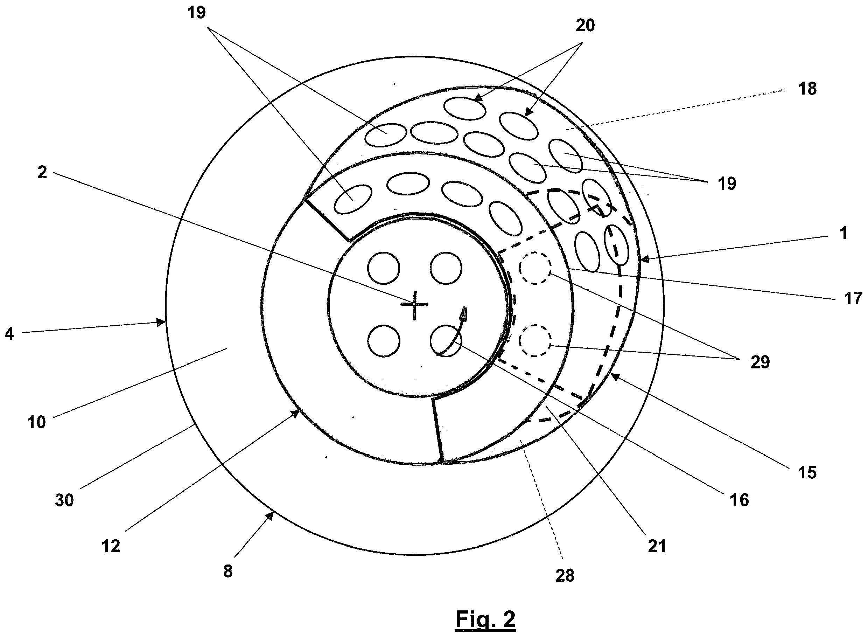

**Fig 2****,** deren Blickrichtung längs der Drehachse 2 verläuft, zeigt die Abdeckhaube 15, die in einer Hauptdrehrichtung 16 des hier bis auf den Innenumfang des Felgentopfs 10 der Felge 8 nicht dargestellten Rads 4 bereits vor einem Bremssattel 17 der Bremseinrichtung 1 beginnt und außer dem Bremssattel 17 eine Bremsstaubauffangeinrichtung 18 abdeckt. An dem Bremssattel 17 sind Bremsbeläge 29 abgestützt, die zum Bremsen in einander entgegen gesetzten axialen Richtung gegen die Bremsscheide 11 andrückbar sind. Die Bremsstaubauffangeinrichtung 18 weist einen oder mehrere durchströmbare Staubfilter 19 auf. Der oder die Staubfilter 19 überspannen hier vergleichsweise große Absaugöffnungen 20 in der Abdeckhaube 15 derart, dass die Abdeckhaube 15 nach außen eine über die Absaugöffnungen hinweg geschlossene Außenkontur 21 aufweist.

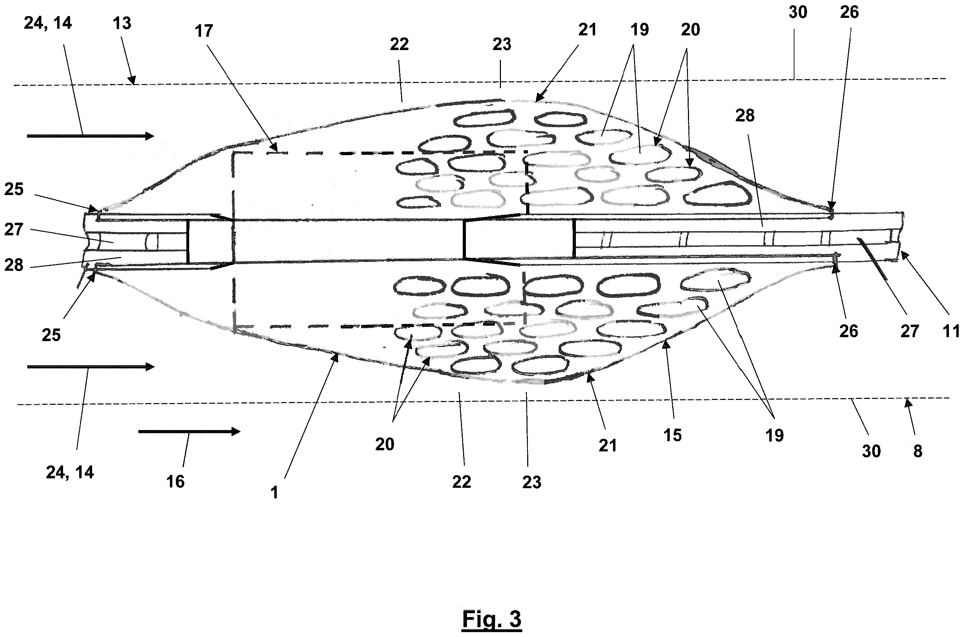

**Fig. 3** zeigt, dass sich ein Strömungskanal 22 zwischen der Außenkontur 21 der Abdeckhaube 15 und einer Gegenfläche 30, die auf der einen Seite der Bremsscheibe 11 von der Felge 8 und auf der anderen Seite der Bremsscheibe 11 von der Abdeckscheibe 13 ausgebildet wird, in der Hauptdrehrichtung 16 des Rads zu einer Engstelle 23 verengt und sich dann wieder erweitert. Der Strömungskanal 22 wird von Teilen 24 der Ringströmung 14 durchströmt. Durch die Verengung des Strömungskanals 22 wird die Ringströmung 14 beschleunigt und so wird durch einen Venturi-Effekt gegenüber dem Inneren der Abdeckhaube 15 ein Unterdruck in dem Strömungskanal 22 erzeugt. Die Unterdruckerzeugung ist besonders effizient die Ringströmung 24 der Außenkontur 21 ohne Strömungsablösung folgt. Genau zu diesem Zweck ist die Abdeckhaube 21 aerodynamisch geformt. Der Unterdruck in dem Strömungskanal 22 ist dort am größten, wo die Geschwindigkeit der Ringströmung 24 am höchsten ist, das heißt an der Engstelle 23. Die Engstelle 23 ist daher in der Hauptdrehrichtung 16 hinter den Bremssattel 17 angeordnet. Der Unterdruck in dem Strömungskanal 22 saugt Luft durch die Absaugöffnungen 20 in der Abdeckhaube 15, und zwar durch den Staubfilter 19 hindurch, sodass durch Betätigung der Bremsvorrichtung 1 freigesetzter Bremsstaub in dem Staubfilter 19 aufgefangen wird. Bei dem Bremsstaub handelt es sich insbesondere um Abrieb von der Bremsscheibe 11 und daran innerhalb des Bremssattels 17 angreifender Bremsbeläge 1. Flach angestellte Vorderkanten 25 der Abdeckhaube, die die Grenzschicht von der Bremsscheibe 11 abheben, liegen in der Hauptdrehrichtung 16 noch vor dem Bremssattel 17. Hinterkanten 26 der Abdeckhaube 15 laufen flach aus, sodass sich die Ringströmung 24 hinter der Abdeckhaube 15 ungestört wieder an die Bremsscheibe anlegen kann. Ein zentraler Kühlkanal 27 der Bremsscheibe 11 ist durch die Abdeckhaube 15 nur im Bereich des Bremssattels 17 radial nach außen abgedeckt. Vor und hinter dem Bremssattel 17 weist die Abdeckhaube Schlitze 28, die den Kühlkanal 27 radial nach außen frei lassen. An der Vorderkante und der Hinterkante des Bremssattels 17 laufen die Schlitze 28 radial nach außen, d. h. von der Drehachse 2 weg aus.

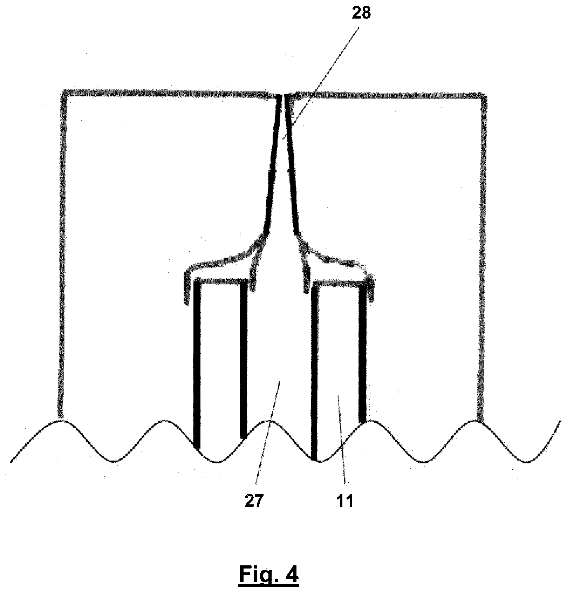

**Fig. 4** illustriert, dass sich die radial zu der Drehachse 2 verlaufenden Schlitze 28 in der Abdeckhaube 15, die an den Kühlkanal 27 in der Bremsscheibe 11 anschließen, radial nach außen verengen. So ruft auch eine Durchströmung des Kühlkanals 27, die sich in einer Durchströmung der Schlitze 28 fortsetzt, einen an die Abdeckhaube 15 angrenzenden Unterdruck hervor, der Luft durch den die Absaugöffnungen 20 überspannenden Staubfilter 19 aus dem Inneren der Abdeckhaube 15 absaugt.
Bei der in **Fig. 5** gezeigten Ausführungsform der Bremsvorrichtung 1 ist eine Filteroberfläche 31 der Staubfilter 19 gefaltet, so dass sie Filtertaschen 32 ausbildet, die quer zu der Hauptdrehrichtung16 verlaufen und gegenüber der Ringströmung 14 angestellt sind. Die nach außen gerichteten Öffnungen der Filtertaschen 32 sind die Absaugöffnungen 20 in der Abdeckhaube 15. Anders als in Fig. 5 dargestellt, sind die Absaugöffnungen 20 so klein, dass sie die Außenkontur 21 nicht so weit unterbrechen, dass die Ringströmung 14 in dem Strömungskanal 22 so sehr gestört wird, dass in dem Strömungskanal 22 kein nutzbarer Unterdruck mehr auftritt. Die gefaltete Filteroberfläche 31 sorgt dafür, dass die zur Beladung mit aufgefangenem Bremsstaub zur Verfügung stehende Fläche der Staubfilter 19 besonders groß ist.

### BEZUGSZEICHENLISTE

- 1: Bremsvorrichtung
- 2: Drehachse
- 3: Stehlager
- 4: Rad
- 5: Federbein
- 6: Tragfeder
- 7: Stoßdämpfer
- 8: Felge
- 9: Reifen
- 10: Felgentopf
- 11: Bremsscheibe
- 12: Radnabe
- 13: Abdeckscheibe
- 14: Ringströmung
- 15: Abdeckhaube
- 16: Drehrichtung
- 17: Bremssattel
- 18: Bremsstaubauffangeinrichtung
- 19: Staubfilter
- 20: Absaugöffnung
- 21: Außenkontur
- 22: Strömungskanal
- 23: Engstelle
- 24: Teil der Ringströmung 14
- 25: Vorderkante
- 26: Hinterkante
- 27: Kühlkanal
- 28: Schlitz
- 29: Bremsbelag
- 30: Gegenfläche
- 31: Filteroberfläche
- 32: Filtertasche

## Patentansprüche

1. Bremsvorrichtung (1) mit
- einer um eine Drehachse (2) drehbar gelagerten Bremsscheibe (11),
- einem einen Rand der Bremsscheibe (11) umgreifenden Bremssattel (17) mit daran abgestützten Bremsbelägen (29), die zum Bremsen gegen die Bremsscheibe (11) andrückbar sind,
- einer dem Bremssattel (17) benachbarten Bremsstaubauffangeinrichtung (18) mit einem durchströmbaren Staubfilter (19),
- einer den Bremssattel (17) und die Bremsstaubauffangeinrichtung (18) abdeckenden Abdeckhaube (15) und
- einem Strömungskörper, der einer Gegenfläche (30) unter Ausbildung eines Strömungskanals (22) mit einer Engstelle (23) derart gegenüber liegt, dass zumindest ein Teil (24) einer durch Drehung um die Drehachse (2) hervorgerufenen Ringströmung (14) um die Drehachse (2) durch den Strömungskanal (22) hindurch tritt,
- wobei im Bereich der Engstelle (23) eine Absaugöffnung (20) in den Strömungskanal (22) mündet,
**dadurch gekennzeichnet, dass** der Strömungskörper die Abdeckhaube (15) ist, wobei die Engstelle (23) in einer Hauptdrehrichtung (16) der Drehung um die Drehachse (2) hinter den Bremsbelägen (29) angeordnet ist und wobei die Absaugöffnung (20) in der Abdeckhaube (15) mit dem Staubfilter (19) der Bremsstaubauffangeinrichtung (18) überspannt ist.

2. Bremsvorrichtung (1) nach Anspruch 1, **wobei** ein Abstand der Engstelle (23) zu den Bremsbelägen (29) in der Hauptdrehrichtung (16) zwischen 10° und 60° und vorzugsweise zwischen 20° und 50° um die Drehachse (2) beträgt.

3. Bremsvorrichtung (1) nach einem der vorhergehenden Ansprüche, **wobei** die Abdeckhaube (15) weitere mit dem oder einem weiteren Staubfilter (19) der Bremsstaubauffangeinrichtung (18) überspannte Absaugöffnungen (20) aufweist, die in der Hauptdrehrichtung (16) vor und/oder hinter der Engstelle (23) in den Strömungskanal (22) münden.

4. Bremsvorrichtung (1) nach Anspruch 3, **wobei** die mit dem oder dem weiteren Staubfilter (19) überspannten Absaugöffnungen (20) in der Abdeckhaube (15) 10 % bis 90 %, vorzugsweise 50 % bis 80 % einer Oberfläche einer dem Strömungskanal (22) zugewandten Außenkontur (21) der Abdeckhaube (15) ausmachen.

5. Bremsvorrichtung (1) nach Anspruch 3 oder 4, **wobei** eine dem Strömungskanal zugewandte Filteroberfläche (31) des oder der die Absaugöffnungen (20) überspannenden Staubfilter(s) (19) eine gefaltet ist, wobei optional quer zu der Hauptdrehrichtung (16) verlaufende Filtertaschen (32) ausgebildet sind.

6. Bremsvorrichtung (1) nach einem der vorhergehenden Ansprüche, **wobei** die oder eine Oberfläche der oder einer dem Strömungskanal (22) zugewandten Außenkontur (21) der Abdeckhaube (15) derart gestaltet ist, dass der durch den Strömungskanal (22) hindurchtretende Teil (24) der durch die Drehung hervorgerufenen Ringströmung (14) über die Länge des Strömungskanals (22) nicht von der Oberfläche abreißt.

7. Bremsvorrichtung (1) nach Anspruch 5,
- **wobei** die Oberfläche der dem Strömungskanal (22) zugewandten Außenkontur (21) der Abdeckhaube (15) an ihrer in der Hauptdrehrichtung (16) auslaufenden Hinterkante (26) unter einem Winkel zwischen 5° und 20°, vorzugsweise zwischen 7° und 15°, zu einer benachbarten Bremsfläche der Bremsscheibe (11) hin verläuft und/oder
- **wobei** die Oberfläche der dem Strömungskanal (22) zugewandten Außenkontur (21) der Abdeckhaube (15) an ihrer der Hauptdrehrichtung (16) entgegengerichteten Vorderkante (25) unter einem Winkel zwischen 7° und 45°, vorzugsweise zwischen 10° und 20°, von einer benachbarten Bremsfläche der Bremsscheibe (11) weg verläuft.

8. Bremsvorrichtung (1) nach einem der vorhergehenden Ansprüche,
- **wobei** der Strömungskanal (22) im Bereich der Engstelle (23) eine kleinste Kanalbreite zwischen 3 mm und 25 mm, vorzugsweise zwischen 5 mm und 15 mm, aufweist und/oder
- **wobei** sich ein freier Querschnitt des Strömungskanals (22) bis zu der Engstelle (23) um 75 % bis 98 %, vorzugsweise um 85 % bis 95 %, verringert.

9. Bremsvorrichtung (1) nach einem der vorhergehenden Ansprüche, **wobei** die Gegenfläche (30) durchgängig um die Drehachse umläuft, wobei die Gegenfläche (30) einen Flächenbereich mit einer radial zu der Drehachse (2) verlaufenden Flächennormalen und optional einen weiteren Flächenbereich mit einer parallel zu der Drehachse (2) verlaufenden Flächennormalen aufweist.

10. Bremsvorrichtung (1) nach einem der vorhergehenden Ansprüche, **wobei** mindestens ein Flächenbereich der Gegenfläche (30) drehest gegenüber der Bremsscheibe (11) angeordnet ist.

11. Bremsvorrichtung (1) nach Anspruch 10, **wobei** der mindestens eine Flächenbereich der Gegenfläche (30) eine Oberfläche einer Felge (8) eines Rads (4) ist, wobei die Bremsscheibe (11) optional in einem Felgentopf (10) der Felge (8) angeordnet ist.

12. Bremsvorrichtung (1) nach einem der vorhergehenden Ansprüche, **wobei** der Strömungskanal (22) auf beiden Seiten der Bremsscheibe (11) eine Engstelle (23) aufweist, in deren Bereichen jeweils mindestens eine mit dem oder einem weiteren Staubfilter (19) überspannte Absaugöffnung (20) der Abdeckhaube (15) in den Strömungskanal (22) mündet.

13. Bremsvorrichtung (1) nach einem der vorhergehenden Ansprüche, **wobei** zumindest ein Flächenbereich der Gegenfläche eine Oberfläche eines Abdeckelements (13) ist, wobei das Abdeckelement (13) optional gegenüber der Bremsscheibe (11) drehfest angeordnet ist.

14. Bremsvorrichtung (1) nach einem der vorhergehenden Ansprüche, **wobei** die Abdeckhaube (15) einen Kühlkanal (27) der Bremsscheibe (11) am Außenumfang der Bremsscheibe (11) über mindestens 50 % der Erstreckung der Abdeckhaube (15) um die Drehachse (2) des Rads (4) nicht abdeckt, wobei sich optional ein über dem Kühlkanal (27) verlaufender Schlitz (18) in der Abdeckhaube (15) in radialer Richtung von der Drehachse (2) weg verengt.

15. Fahrzeug, insbesondere Kraftfahrzeug, mit mindestens einem Rad (4) und einer Bremsvorrichtung (1) nach einem der vorhergehenden Ansprüche, an deren Bremsscheibe (11) das Rad (4) festgelegt ist.
